Europäisches Patentamt

(19) European Patent Office

Office européen des brevets

(11) Publication number: **0 010 849**

**A1**

(12) **EUROPEAN PATENT APPLICATION**

(21) Application number: **79301910.0**

(22) Date of filing: **17.09.79**

(51) Int. Cl.³: **G 02 B 23/08, F 41 G 1/40**

(30) Priority: **23.10.78 US 953995**

(71) Applicant: **FMC CORPORATION, 200 E. Randolph Drive, Chicago Illinois (US)**

(43) Date of publication of application: **14.05.80 Bulletin 80/10**

(72) Inventor: **Garber, Arnold L., 575, Victoria Drive, Gilroy, California 95020 (US)**

(74) Representative: **Corin, Christopher John et al, Mathisen Macara & Co. Lyon House Lyon Road, Harrow Middx. HA1 2ET (GB)**

(84) Designated Contracting States: **BE DE FR GB IT NL**

(54) **A periscopic sight.**

㊼ A periscopic sight (11, 13, 14) is mounted to extend through the wall of protective armour (23) surrounding a gun station. An elevation mirror (11) is exposed to receive light from the direction in which the gun is pointing and to reflect the light along a vertical path extending through the sight. A sealed unitary lens system (13) has a lens axis aligned with the vertical path and conducts the light therethrough to a stationary mirror (14) accessible to the eye (16) of an observer.

The sealed unitary lens systems has a sufficiently long eye relief to provide an unobstructed image to the observer in spite of the placement of the stationary mirror (14) between the lens system (13) and the observer (16).

# A PERISCOPIC SIGHT

This invention relates to a periscopic sight comprising upper and lower reflectors.

The word periscope means literally "to look around" and is applied to instruments for observing out of or into otherwise virtually inaccessible locations. Periscopes may vary from simple "over the wall" periscopes, consisting of two plain mirrors, to periscopes containing elaborate telescopic lens systems. In present day armoured vehicles periscopes are furnished for the crew members for general observation and also for gun sighting. The simple mirror arrangement can be used for general viewing, but the gun sighting applications usually require a telescopic lens system with moderate magnification. The guns are mounted in turrets which are movable in azimuth relative to the vehicles. The guns are also movable in elevation within the turrets. The gun-sighting periscopes are provided with an elevation scanning prism at the top to direct the images toward an objective lens and a stationary prism at the bottom to direct the objective image toward an eyepiece at an observer's station. Seals are required between the elevation prism and the objective lens as well as between the elevation prism and the surrounding environment. The objective lens, the stationary lower prism and the eyepiece lens must also all be sealed from the surrounding environment so that moisture is prevented from fogging any of the surfaces in the lens system. Periscopic sight systems as hereinbefore either require that the observation point be relatively close to the eyepiece, due to short eye relief, or they require complex and expensive constructions due to the requirement for long eye relief. It has already been proposed in United States patent specification No 3,454,322 to provide a periscopic sight which includes a high-powered optical system, an image intensifier and pivotal mirror for receiving an image over a limited angular range. Further, this head mirror is movable by a drive system which is coupled to a gun trunnion by means of a parallelogram linkage so as to ensure that gun and mirror elevation are always synchronized.

The open arrangement of the lens system of this prior specification render it liable to fogging and ingress of dirt. Further the previous proposal does not facilitate the provision of long eye relief.

The invention in its various aspects seeks to overcome the problems of keeping the lens system free of fogging and dirt under the ardous conditions usually encounted on the battle field and also seeks to improve the matching of the sight and of the gun directions.

These problems are solved respectively by the provision of a unitary sealed lens system having a generally vertical lens axis therethrough and including an objective, an erector and an eyepiece aligned on said axis, said lens system having long eye relief, the upper reflector being aligned to intercept one end of said lens axis and the lower reflector being aligned to intercept the other end of said lens axis and to reflect light passing along said lens axis in a generally horizontal direction, said upper and lower reflectors being spaced from said sealed lens system, at the upper and lower ends thereof respectively and, by the provision of a sealed unitary erecting lens system having an objective end and an eyepiece end mounted within the compartment in a generally vertical orientation and having a lens axis aligned with a generally vertical light path through the compartment wall, said lens system having relatively long eye relief, said lens axis intersecting said elevation reflector in a direction substantially perpendicular to said elevation axis, said means connecting the elevation reflector to gun rotor being arranged to drive said elevation reflector at substantially one half the angular elevation rate of the gun rotor, and a stationary reflector mounted below the eyepiece end of said lens system to intercept said light path, said stationary reflector being spaced from said eyepiece end for reflecting light in a generally horizontal path from said light path. The unitary lens system has a relatively long eye relief which is at least as long as the sum of the distances between the eyepiece and the stationary reflector and between the stationary reflector and the observing position. The lens system thus provides a given magnification with a large exit pupil and long eye relief, as well as rigid mechanical characteristics due to the unitary construction of the lens system framework.

A periscopic sight embodying the invention will now be described, by way of example, with reference to the accompanying diagrammatic drawings, in which:

Fig. 1 is a block diagram showing the interrelation of the various components of the periscopic sight;

Fig. 2 is a fragmentary longitudinal section through a gun station incorporating the periscopic sight of Fig. 1;

Fig. 3 is an optical lens diagram showing a lens arrangement within the unitary sealed lens system of the periscopic sight; and

Fig. 4 is a diagram of a mechanical coupling between an elevation mirror of the periscopic sight and a controlled gun rotor.

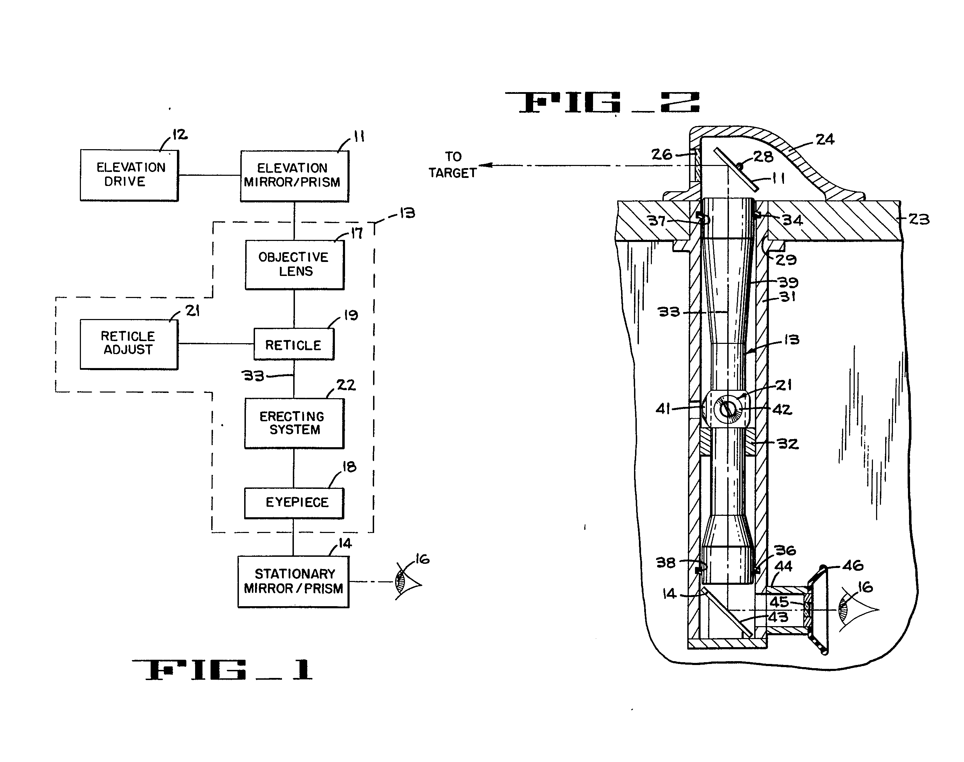

The block diagram of Figure 1 depicts a periscopic sight in accordance with the invention which includes an elevation reflector 11, which may comprise a mirror or a prism and which is movable rotationally about an elevation axis by an elevation drive 12. Light approaching the elevation reflector from a particular direction is reflected into the objective end of a unitary sealed lens system 13 along a lens axis extending, in a vertical direction, therethrough. The light leaves from an eyepiece end of the lens system and impinges on a stationary reflector 14, which is located at a predetermined distance from the eyepiece end of the lens system.

The stationary reflector 14 reflects an image to an observation point 16 where the image can be viewed and which is, of necessity, positioned some distance from the stationary reflector.

The unitary lens system 13 has an objective lens 17 at the objective end thereof and an eyepiece 18. Disposed between the objective lens and the eyepiece is a reticle 19 providing a crosshair reference within the lens system field relative to which a gun used in conjunction with the periscopic sight can be bore-sighted. A reticle adjustment mechanism 21 is provided by which the reticle 19 can be moved within the field of the lens system. The mechanism 21 may take any one of the forms well known to those skilled in this art. An errecting lens system 22 is provided between the objective lens and the eyepiece. A terrestrial telescope is thus incorporated in the periscope sight as a unitary sealed lens system which may, for example, comprise a commercially available rifle scope such as the Redfield Accu-trac (Registered Trade Mark), a low profile, wide field rifle scope manufactured by Redfield Co. of Denver, Colorado, United States of America.

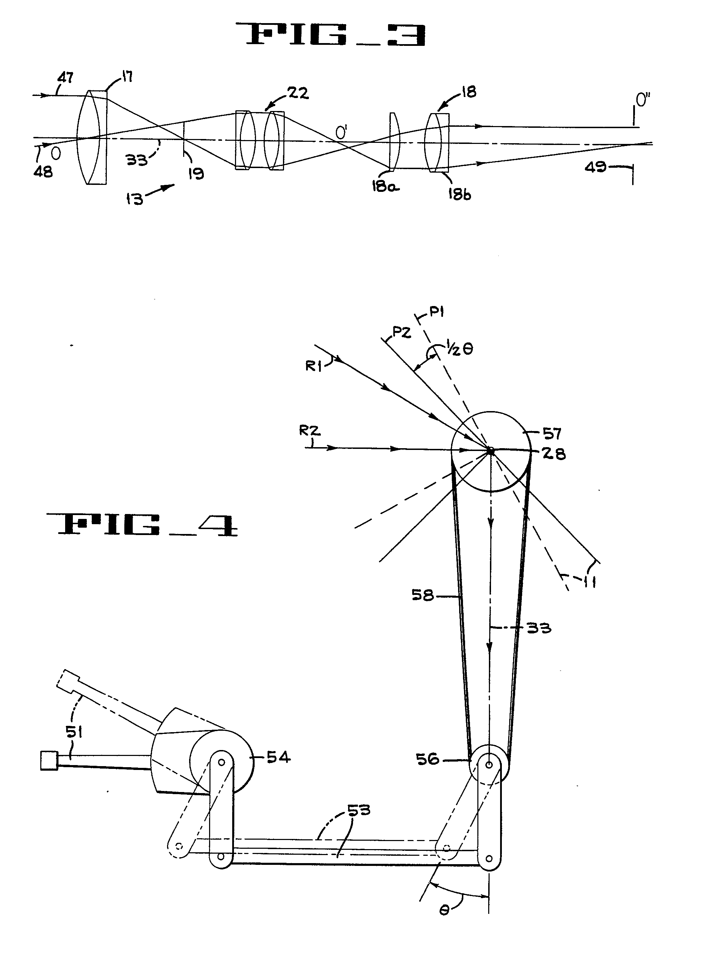

In Figure 2 a section of armour plate 23 such as that provided for a gun turret station in an amoured vehicle is shown for mounting the periscope.

An external housing 24 is provided having a front viewing window 26. The elevation reflector 11, which takes the form of a mirror, is mounted within the housing 24 and is rotatable about an elevation axis 28. An aperture 29 is formed in the armour plate 23 within which is fixed a periscopic sight housing 31. The unitary system 13 is mounted within the housing 31 by an annular mounting block 32. The lens system has an axis 33 which intersects the elevation mirror 11 substantially perpendicularly to the elevation axis 28.

The system 13 is engaged within the housing 31 at the upper and lower ends by "0" rings 34 and 36 carried in "0" ring grooves 37 and 38, respectively, formed in the inner surface of the housing. The "0" ring 34 serves to isolate the mirror 11 and the inner surface of the viewing window 26 from ambient moisture.

A sealing case 39 is provided for the lens system 13 operating to support structurally the lenses and the reticle in predetermined spaced relationship. The reticle adjustment mechanism 21 is accessible at the exterior of the lens system sealing case, appearing as rotary adjustment knobs 41 and 42. The knobs 41 and 42 may be rotated by a tool, such as a screwdriver, from externally of the housing 31. The stationary reflector, in the form of a mirror 14, is mounted within the housing 31 adjacent to the eyepiece end of the lens system 13 so that a predetermined distance exists between the eyepiece and the reflective surface 43 of the mirror 14.

When a mirror is used as the stationary reflector, it is preferably a first surface mirror, (Figure 2), so that secondary reflections are avoided. In the event a prism is used as the stationary reflector, the reflective surface should be on the diagonal, i.e., inclined to be parallel to the reflective surface 43 shown in Figure 2. The housing 31 has an eye rest tube 44 projecting horizontally from a lower end portion thereof. The tube 44 has a path therethrough aligned with the reflected light from the reflective surface 43 and extending through an eye rest window 45 toward the observation station 16. The "O" ring 36 serves to isolate the mirror 14 and the inner surface of the window 45 from ambient moisture. The tube 44 has a yielding protective cup 46 around the end thereof to prevent injury to an observer should the observer be pitched forward.

The lenses of the system 13 are shown in Figure 3 and have their lens axes coinciding with the lens axis 33 of the lens system. The objective lens 17 is shown with a light ray 47 parallel to the lens axis impinging on the lens and crossing the lens axis at the focal plane of the objective lens. The reticle 19 is shown positioned at the focal plane of the objective lens. A principal ray 48 is shown passing through the centre of the objective lens and impinging upon the periphery of the erecting lens assembly 22. The erecting lens system has two doublet lenses. The rays 47 and 48 from an object in front of the objective lens 17 are presented in erect orientation to the eyepiece 18, which consists of a field lens 18a and an eyepiece lens 18b. The telescopic lens arrangement of Figure 3 provides a given magnification, a large exit pupil, and a long eye relief. Rugged mechanical construction is provided by virtue of the lens system sealing case 39 (Fig. 2) which rigidly supports the lens components therein in predetermined spaced relationship.

In a lens system such as that seen in Figure 3 there is an aperture which limits the size of the axial cone of energy transmitted from an object located to the left of the objective lens 17. This limiting aperture is called the aperture stop and is located along the lens axis 33 at the point 0' having the diameter of the axial cone of rays at 0'. The principal ray 48 passes through the centre of the aperture stop. That space on the objective side of the lens system is referred to as the objective space and that space on the eyepiece side of the lens system is referred to as the image space. Every optical lens system is effectively two systems, each system consisting of the same optical elements. One system forms a series of images of the object and the other systems forms a series of images of the aperture stop. When the lens system is designed for use by an observer in visually covering a field of view, the optimum point for the observer to place his eye is termed the exit pupil. The exit pupil of a lens system is defined as the location of the image of the aperture stop in the image space, which is seen at 0" in Figure 3. Note that the exit pupil is located by the intersection of the principal ray 48 and the lens axis 33 behind the eyepiece 18. The exit pupil diameter is the diameter of the axial ray bundle at the exit pupil. The displacement of the plane containing the exit pupil from the eyepiece of a lens assembly is termed the eye relief. A large displacement constitutes long eye relief. Long eye relief and a relatively large exit pupil are provided by the unitary lens system hereinbefore described.

The location of the exit pupil for the lens system of Figure 3 depends on the location of the image 0' of the objective lens 0. The farther the point 0' is located to the right (Fig. 3) of the erecting lens system 22, the greater will be the eye relief. Eye relief can be decreased by placing a field lens at the focal plane of the objective lens 17. The stronger the field lens is made, that is, the more it bends light rays impinging thereupon, the more the point 0' will be moved to the left in Figure 3. Elimination of the field lens at the focal plane of the objective lens provides for maximum eye relief, as in the lens system shown. The exit pupil is illustrated by the aperture 49 of Figure 3. The eye relief for this particular lens system is therefore seen as the distance from the eyepiece 18 to the exit pupil at 0" along the lens axis 33.

- 10 -

One manner in which a gun 51 mounted in an armoured turret may be aligned with the elevation mirror 11 of the periscopic sight is shown in Figure 4. A parallel bar drive linkage 53 is coupled between the gun rotor 54 and an elevation mirror sheave 56. The gun is fixedly mounted to the gun rotor to move in elevation therewith. An elevation mirror angle-reducing sheave 57 is mounted on the elevation axis 28 wherein it is coupled to the elevation mirror 11. A taut metal band 58 passes around the drive sheave and the reducing sheave. The reducing sheave has a diameter which is twice that of the drive sheave; consequently, when the drive sheave rotates through an angle $\theta$ (as shown in Fig. 4), the reducing sheave rotates through an angle of 1/2 $\theta$. This angular reduction is necessary (as illustrated in Fig.4) because rotation of the elevation mirror 11 through an angle of 1/2 $\theta$ will provide for a change through the angle $\theta$ for light impinging on the surface of the elevation mirror 11 and reflected along the lens axis.

This may be seen be reference to Figure 4 where the ray R1 approaches the surface of the elevation mirror 11 from an angle 30 degrees above the horizontal and is reflected on the lens axis 33 when the elevation mirror is positioned at an angle 60 degrees above the horizontal as seen at P1. The ray R1 extends along a direction parallel to the elevation of the gun barrel 51 shown in double chain lines in Figure 4. When the gun barrel is depressed to the horizontal, as seen in solid lines in Figure 4, the reflecting surface of the elevation mirror 11 will be depressed to an angle 45 degrees above the horizontal (as shown by line P2) so that horizontal rays represented by line R2 are reflected thereby along the lens axis 33. It may therefore be seen that when the gun 51 is depressed 30 degrees, the reflective surface of the elevation mirror 11 must be depressed only 15 degrees to the position shown for the rays impinging thereupon from the direction in which the gun is pointing to continue to be reflected down the lens axis 33.

An amoured vehicle periscopic sight has been described which includes a unitary lens system such as provided by a commercial rifle scope. The rifle scope includes the image-forming optics, a reticle and reticle adjustment mechanism, and a rugged sealed housing. The lens system may include zoom lenses, if desired. The long eye relief, generally about 7.5 cm. or more, allows a stationary prism or first surface mirror to be located behind the eyepiece to turn the light rays from vertical to horizontal without interfering with the exit pupil.

- 1 -

CLAIMS

1. A periscopic sight comprising upper and lower reflectors (11, 14) characterized by a unitary sealed lens system, (13) having a generally vertical lens axis therethrough and including an objective (17), an erector (22) and an eyepiece (18) aligned on said axis (33), said lens system having long eye relief, the upper reflector (11) being aligned to intercept one end of said lens axis (33) and the lower reflector (14) being aligned to intercept the other end of said lens axis (33) and to reflect light passing along said lens axis in a generally horizontal direction, said upper and lower reflectors (11, 14) being spaced from said sealed lens system at the upper and lower ends thereof respectively.

2. A periscopic sight as claimed in claim 1 characterized by means (28) for rotating said upper reflector (11) about a generally horizontal axis.

3. A periscopic sight for use in directing a gun (51) having a gun rotor (54) attached thereto which is movable in elevation and mounted on an amoured compartment (23), said sight comprising an elevation reflector (11) mounted on the exterior of the amoured compartment, and means (58, 53) connecting said elevation reflector to said gun rotor for movement about a generally horizontal elevation axis, characterized by
in-that a sealed unitary erecting lens system (13) having an objective end and an eyepiece end mounted within the compartment in a generally vertical orientation and having a lens axis (33) aligned with a generally vertical light path through the compartment wall (23), said lens system having relatively long eye relief, said lens axis (33) intersecting said elevation reflector in a direction substantially perpendicular to said elevation axis (28), said means (58, 53) connecting the elevation reflector to the gun rotor being arranged to drive said elevation reflector at substantially one half the angular elevation rate of the gun rotor, and a stationary reflector (14) mounted below the eyepiece end of said lens system to intercept said light path, said stationary reflector being spaced from said eyepiece end for reflecting light in a generally horizontal path from said light path.

4. A periscopic sight as claimed in claim 3 characterized in that
said elevation and stationary reflectors (11, 14) are first surface mirrors.

5. A periscopic sight as claimed in claim 3 characterized in that
said elevation and stationary reflectors (11, 14) are prisms.

6. A periscopic sight as claimed in claim 3 claim 4 or claim 5 characterized in that
said unitary erecting lens system (13) includes an objective lens (17), a reticle (19), an erecting lens (22) and an eyepiece (18).

7. A periscope sight comprising a casing (31), an upper reflector (11) positioned at the upper end of said casing to receive light rays and to reflect them downwardly along a generally vertical axis (33), and lower reflector (14) positioned at the lower end of said casing and arranged along said axis (33) to receive said light rays and direct them in a generally horizontal direction, characterized by
a rifle scope (13) having a relatively long eye relief positioned in said casing between and spaced from said upper and lower reflectors (11, 14), said vertical axis (33) being coincident with the lens axis of said rifle scope.

FIG_2

FIG_1

ELEVATION DRIVE 12

ELEVATION MIRROR/PRISM 11

13

OBJECTIVE LENS 17

RETICLE ADJUST 21

RETICLE 19

33

ERECTING SYSTEM 22

EYEPIECE 18

STATIONARY MIRROR/PRISM 14

16

TO TARGET

26 28 24 11 37 34 23 29 39 31 33 13 41 21 42 32 38 36 44 46 14 45 16 43

1/2

0010849

# FIG_3

# FIG_4

European Patent Office

# EUROPEAN SEARCH REPORT

00 10849

Application number

EP 79 301 910.0

| | DOCUMENTS CONSIDERED TO BE RELEVANT | | CLASSIFICATION OF THE APPLICATION (Int. Cl.) |
|---|---|---|---|
| Category | Citation of document with indication, where appropriate, of relevant passages | Relevant to claim | |
| | US - A - 3 966 298 (CHAPMAN) <br> * fig. 1 * <br> -- | 1,2 | G 02 B 23/08 <br> F 41 G 1/40 |
| | DE - B - 1 703 861 (KELLER & KNAPPICH GMBH) <br> * fig. 1 * <br> -- | 3,5 | |
| A | GB - A - 1 272 741 (ERNST LEITZ GMBH) <br> * page 2, lines 26 to 37 * <br> -- | 1,2 | |
| A | US - A - 3 261 260 (J.M. STRANG) <br> * column 2, lines 45 to 48 * <br> -- | 7 | TECHNICAL FIELDS SEARCHED (Int.Cl.) <br> F 41 G 1/40 <br> G 02 B 23/08 |
| A | AT - B - 114 628 (G. WOLF GMBH) <br> * claim * <br> ---- | | |

CATEGORY OF CITED DOCUMENTS

X: particularly relevant
A: technological background
O: non-written disclosure
P: intermediate document
T: theory or principle underlying the invention
E: conflicting application
D: document cited in the application
L: citation for other reasons

&: member of the same patent family, corresponding document

X The present search report has been drawn up for all claims

| Place of search | Date of completion of the search | Examiner |
|---|---|---|
| Berlin | 29-01-1980 | FUCHS |

EPO Form 1503.1 06.78